# EUROPEAN PATENT APPLICATION

(11) **EP 0 543 677 A1**
(43) Date of publication of application: **26.05.1993**
(21) Application number: 92310658.7
(22) Date of filing: 23.11.1992
(51) Int. Cl.: G01N 21/89

(54) **Method for detecting pinholes in continuously cast billets**

(30) Priority: 22.11.1991 NO 914574
(71) Applicant: ELKEM TECHNOLOGY A/S, N-0483 Oslo 4 (NO)
(72) Inventor: Bjornestol, Karl Otto, N-4621 Kristiansand (NL); Malmo, Jan Tore, N-7036 Trondheim (NO); Strom, Yngve, N-0378 Oslo 3 (NO); Vikhagen, Eiolf, N-7045 Trondheim (NO)
(74) Representative: Rees, David Christopher

(57) **Abstract**

A method for detection of pinholes in continuously cast metal billets (2). The billets (2) are continuously passed by a symmetrical light source (3) comprising a plurality of individual light sources arranged in a circle or in some other way such that the light falls substantially symmetrically on that part of the surface of the billet (2) which is to be examined. The surface of the billet (2) which faces the light source (3) is illuminated except for any pinholes and reflected light from the surface of the billet (2) is detected by means of a linescan camera (4) arranged centrally in relation to the light source (3). The camera (4) has a scanning direction which is normal to the direction of movement of the metal billet (2), whereby pinholes are detected by the registration of a reflected light intensity which is below a preset threshold value.

## Description

The present invention relates to a method for the detection of pinholes in the surface of continuously cast metal billets, particularly continuously cast steel and aluminium billets.

Pinholes are open holes in the surface of continuously cast metal billets, mainly caused by gas formation in the metal during continuous casting. Metal billets having pinholes exceeding a certain size cannot be used. Up till now, detection of pinholes has been done manually. This is an uncertain, slow and costly method.

It is an object of the present invention to provide an automatic and continuous method for detecting and marking pinholes in continuously cast metal billets, particularly in continuously cast steel billets and aluminium billets.

Accordingly, the present invention provides a method for the detection of pinholes in the surface of a cast metal article such as a billet characterised by moving the article relative to a light source comprising a plurality of individual light sources arranged in a regular pattern; causing light from the light source to fall substantially symmetrically on that part of the surface which is to be examined in such a way that the surface on which the light impinges is illuminated except for any pinholes; and detecting reflected light from the surface by means of a linescan camera which has a scanning direction normal to the direction of movement of the article, whereby pinholes are detected by the registration of a reflected light intensity which is below a preset threshold value. The invention is particularly applicable to continuously cast metal billets.

Preferably the light source is itself symmetrical. Preferably, the individual light sources are arranged in a circle. According to a preferred embodiment of the present invention the symmetrical light source has a circular geometry with a circle diameter exceeding the width of the metal billet. Preferably, the camera is arranged centrally in relation to the light source.

In order to ensure the detection of all pinholes having diameters above a preset value, the transport speed of the metal billet is preferably adjusted in such a way in relation to the scanning speed of the camera that the metal billet is transported a distance that is less than the minimum pinhole diameter to be detected from the start of one scan to the start of the next scan. Alternatively the scanning speed of the camera may be adjusted in such a way in relation to the transportation speed of the metal billet that the metal billet from the start of one scan to the start of the next scan, is transported a length which is less than the preset minimum pinhole diameter to be detected.

According to a preferred embodiment of the present invention the transport speed of the metal billet and/or the scanning speed of the camera are adjusted in such a way that the metal billet is transported a distance which is less than half of the preset minimum pinhole diameter from the start of one scan to the start of the next scan. The light intensity registered by the linescan camera is preferably forwarded to a computer in which the position and the size of detected pinholes are calculated and stored and/or shown directly on a video screen.

By the present invention it has been found that pinholes in continuously cast metal billets can be detected automatically and very rapidly and the positions and sizes of the pinholes in a metal billet can be stored in a computer, whereby the pinholes can subsequently be removed by metal working.

The present invention may be carried into practice in variously ways and one embodiment will now be described by way of example with reference to the accompanying drawings in which:-
Figure 1 is a schematic diagram of an apparatus which can be used to carry out the method of the present invention;
Figure 2 shows the surface of a steel billet with marked pinholes; and
Figure 3 shows the result of pinhole detection of the billet of Figure 2 by the method of the invention.

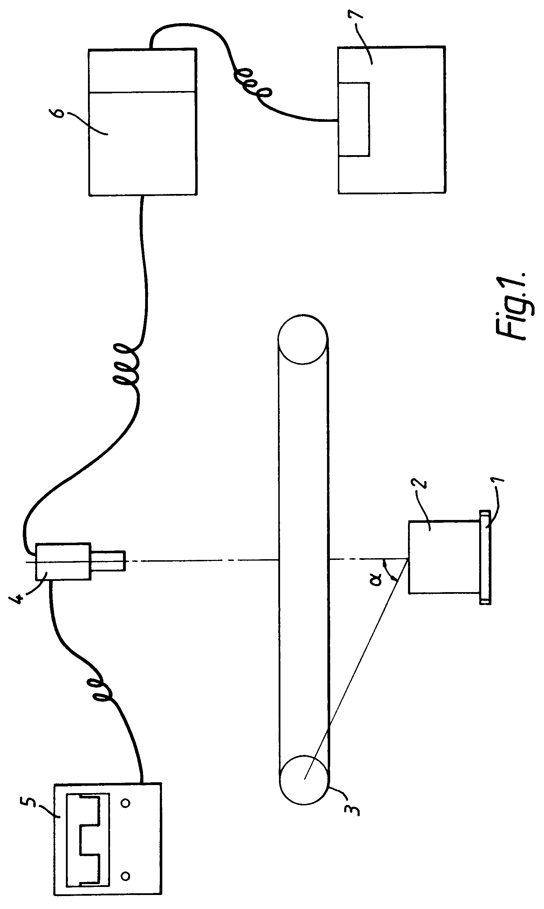

The apparatus shown in Figure 1 comprises a transport rail 1 for the transport of a continuously cast metal billet 2. Above the metal billet 2 there is a light source 3, which provides a symmetric illumination geometry, in this case, a plurality of single light sources arranged over a circular area. Above, and centrally located in relation to the light source 3, there is a linescan camera 4 for detecting reflected light from the surface of the metal billet 2. The camera 4 is used to scan reflected light in a direction normal to the direction of movement of the metal billet 2.

An oscilloscope 5 is connected to the camera 4 and is used to adjust the focus of the camera 4. The threshold value is adjusted in such a way that the intensity of reflected light from parts of the surface of the metal billet having no pinholes, is above the threshold value. When the camera registers a reflected light intensity below the threshold value, this is registered as a pinhole. The positions of the registered pinholes are recorded by a computer 6 and the data can be stored and/or can be shown directly on a video screen 7.

The invention will now be further illustrated in the following example.

### EXAMPLE

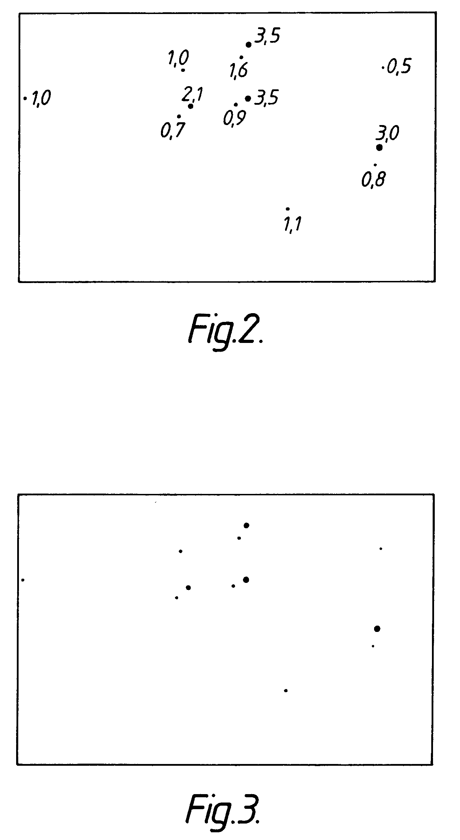

A piece of continuously cast steel billet having a length of 25 cm and a width of 8.8 cm was tested in accordance with the method of the present invention. By visual inspection it was found to have 12 pinholes situated on one of the surfaces of the test piece. The test piece is schematically shown in Figure 2 with the pinholes indicated and their respective diameters given in mm. The test piece was tested in an apparatus corresponding to the apparatus shown in Figure 1.

A circular, symmetrical light source was used, having a diameter of 40 cm. Its illumination angle against the test piece was 63 °.

A linescan camera having a linescan frequency of 1500 Hz was arranged 112 cm above the surface of the test piece and the registrations of reflected light were fed from the camera to a computer where the data was treated. The result was shown directly on a video screen.

The transport speed for the metal billet was 320mm/second and the steel specimen was transported 0.28 mm between the start of one linescan and the start of the next linescan. The result is shown on Figure 3. As can be seen from Figure 3, all 12 pinholes were clearly detected.

## Claims

1. A method for the detection of pinholes in the surface of a cast metal article such as a billet (2), characterised by moving the article (2) relative to a light source (3) comprising a plurality of individual light sources arranged in a regular pattern; causing light from the light source (3) to fall substantially symmetrically on that part of the surface which is to be examined, in such a way that the surface on which the light impinges is illuminated except for any pinholes; and detecting reflected light from the surface by means of a linescan camera (4) which has a scanning direction normal to the direction of movement of the article (2), whereby pinholes are detected by the registration of a reflected light intensity which is below a preset threshold value.

2. A method as claimed in Claim 1 characterised in that the light source (3) is itself symmetrical.

3. A method as claimed in Claim 1 or Claim 2, characterised in that the individual light sources are arranged in a circle.

4. A method as claimed in Class 3, characterised in that the diameter of the circle exceeds the width of the article (2).

5. A method as claimed in any preceding Claim, characterised in that the camera (4) is arranged centrally in relation to the light source (3).

6. A method as claimed in any preceding Claim, characterised in that the relative speed of the article (2) and/or the scanning speed of the camera (4) are adjusted in such a way that the article (2) is transported a distance which is less than a preset minimum pinhole diameter from the start of one scan to the start of the next scan.

7. A method as claimed in Claim 6, characterised in that the relative speed of the article (2) and/or the scanning speed of the camera (4) are adjusted in such a way that the article (2) is transported a distance which is less than half of the preset minimum pinhole diameter from the start of one scan to the start of the next scan.
